# EUROPEAN PATENT SPECIFICATION

(11) **EP 2 557 484 B1**
(45) Date of publication and mention of the grant of the patent: **06.12.2017**
(21) Application number: 11765254.5
(22) Date of filing: 13.01.2011
(51) Int. Cl.: G06F 3/048, G06F 3/0485, G06F 3/0488

(54) **INFORMATION PROCESSING SYSTEM, OPERATION INPUT DEVICE, INFORMATION PROCESSING DEVICE, INFORMATION PROCESSING METHOD, PROGRAM AND INFORMATION STORAGE MEDIUM**
INFORMATIONSVERARBEITUNGSSYSTEM, BETRIEBSEINGABEVORRICHTUNG; INFORMATIONSVERARBEITUNGSVORRICHTUNG; INFORMATIONSVERARBEITUNGSVERFAHREN, PROGRAMM UND INFORMATIONSSPEICHERMEDIUM
SYSTÈME DE TRAITEMENT D'INFORMATIONS, DISPOSITIF D'ENTRÉE DE COMMANDE, DISPOSITIF DE TRAITEMENT D'INFORMATIONS, PROCÉDÉ DE TRAITEMENT D'INFORMATIONS, PROGRAMME ET SUPPORT DE MÉMORISATION D'INFORMATIONS

(30) Priority: 09.04.2010 JP 2010090932; 09.04.2010 JP 2010090931
(43) Date of publication of application: 13.02.2013
(73) Proprietor: Sony Interactive Entertainment Inc., Tokyo 108-8270 (JP)
(72) Inventor: TAKASE, Masaki, Tokyo 108-0075 (JP); KARASAWA, Hidenori, Tokyo 108-0075 (JP); UCHINO, Ryota, Tokyo 108-0075 (JP)
(74) Representative: D Young & Co LLP
(86) International application number: PCT/JP2011/050443
(87) International publication number: WO 2011/125352

(56) References cited:
- WO-A1-2006/096501
- WO-A2-2009/137419
- JP-A- 2005 321 964
- JP-A- 2008 532 185
- JP-A- 2009 042 993
- JP-A- 2010 049 679
- US-A1- 2008 204 402
- US-A1- 2009 085 886
- US-A1- 2009 295 753

## Description

### TECHNICAL FIELD

The present invention relates to an information processing system, an operation input device, an information processing device, an information processing method, a program, and an information storage medium.

### BACKGROUND ART

Information processing systems, such as portable game devices, which allow a user to enjoy a game by operating a touch panel (touch screen) comprising a display unit and a touch sensor have been available.

According to some of such information processing systems, for example, when a user traces a touch panel with his/her finger or a stylus, a line is shown along the traced track.

Also, according to some of such information processing system, for example, when a user touches one of a plurality of images (e.g., an image indicative of an icon or a button) shown on a touch panel with his/her finger or a stylus, a processing corresponding to the touched image is executed. Patent Literature 1 describes a technique for switching the contents displayed on a display placed side by side with a touch display different from the display, in response to a touch on a menu shown on the touch display.

Patent Literature 1: Japanese Patent Laid-open Publication No. 2003-87673

Previously proposed arrangements are disclosed in US 2009/085886 A1, WO 2009/137419 A2, WO 2006/096501 A1, and US 2009/295753 A1 which discloses distributing options around the edge of a screen that are summoned by touching a predetermined position on the bezel.

### SUMMARY OF INVENTION

### Technical Problem

According to a conventional information processing system, the display surface of a display unit included in a touch panel occupies the same area as the detection surface of a touch sensor included in the touch panel. Therefore, when a user carries out an operation of tracing the touch panel from outside to inside thereof (or vice versa) with his/her finger or a stylus, that operation cannot be discriminated from an operation of tracing the touch panel from an edge thereof to the inside (or vice versa) . That is, according to a conventional information processing system, the range of variation of detectable operations on the touch panel is limited, and so is the range of variation of feasible processings.

According to an information processing system, such as a portable game device, images indicative of options, such as icons and buttons, to be touched by a user may be shown aligned in a single line along an edge of the display surface of the display unit so as not to deteriorate recognizability of the information shown. Moreover, according to a conventional information processing system, as the display surface of a display unit included in a touch panel occupies the same area as the detection surface of a touch sensor included in the touch panel. Therefore, when a user touches an area near an edge of the touch panel, the position touched may or may not be detected depending on whether the touch panel or an area outside the touch panel is touched.

To address the above, it is considered that no image of an icon or a button to be touched by a user is displayed in an area near an edge of the touch panel. However, this results in a smaller display surface to be effectively utilized. Alternatively, it is considered that a frame is provided along the circumferential edge of the touch panel so as to prevent a user from touching an area outside the touch panel. However, this deteriorates easiness in touching an area near an edge of the touch panel.

The present invention has been conceived in view of the above, and one object thereof is to provide an information processing system, an operation input device, an information processing device, an information processing method, a program, and an information storage medium capable of increasing the range of variation of a processing executed based on a touch operation.

Another object of the present invention is to provide an information processing device, an operation input device, an information processing system, an information processing method, a program, and an information storage medium capable of effectively utilizing the display surface of a display unit, while ensuring preferable operability in a touch operation by a user.

### Solution to Problem

In order to achieve the above described object, an information processing system according to the present invention includesan image processing unit which displays images on a display; and a processing executing unit which executes processes according to at least one of a plurality of options displayed in a menu image on the said display, wherein the said image processing unit displays an indicator image along the edge of a display part, and in that the said information processing system is furnished with a touch sensor comprising an inner area occupying the display surface of the display, and an outer area which is an area outside and adjacent to the said display surface, and when a slide operation of an object across the indicator image from the outer area toward the inner area is detected by the touch sensor, which detects the positions of an object on the touch sensor area and which is capable of detecting the relevant position even when this extends into the said outer area, a menu image is displayed in which a plurality of options are aligned and in which the option with the shortest distance from the position detected by the said touch sensor is highlighted, whereby when the said touch sensor detects detection results corresponding to the movement of an the object by the user in a direction along the edge of the said display surface on which the said plurality of options are aligned, the said information processing system changes the option which is highlighted accordingly with the detection results, and whereby when the said touch sensor has detected detection results corresponding to further movement of an the object by the user in a direction towards the middle part of the said display surface, processing is executed based on the option which is highlighted.

An information processing method according to the present invention includes an image display processing step at which images are displayed on a display; and a process execution step at which processes are executed according to at least one of the plurality of options displayed in a menu image on the said display, wherein at said image processing step, an indicator image is displayed following along the edge of a display part, in the said display processing step, when a slide operation of an object across the indicator image from an outer area toward an inner area is detected by a touch sensor, which detects the position of an object on a touch sensor area furnished in an area comprising the inner area occupying said display surface of the display and the outer area which is an area outside and adjacent to the said display surface, and is capable of detecting the particular position even when this detected position protrudes into the said outer area, it displays at the position of the said indicator image and following along the edge of the said indicator image, a menu image of multiple options in alignment and with the option with the shortest distance from the position detected by that touch sensor highlighted, in the said display processing step, when the said touch sensor detects detection results corresponding to the movement of the object by the user, in the direction along the edge of the said display part in which the said plurality of options are aligned, the option which is highlighted is changed according to the particular detection results, and in the said process execution step, when the said touch sensor detects detection results corresponding to further movement of an object by the user in a direction towards the centre of the said display surface, the data showing the detection results is output to an information processor which executes processes on the basis of the highlighted option.

A program according to the present invention causes a computer to function as a processing executing unit that executes the above method.

A computer readable information storage medium according to the present invention stores the above program.

According to the present invention, as a processing based on a position corresponding to a position in the display surface and a position corresponding to a position in the outside area outside the display surface can be executed, the range of variation of a processing executed by a touch operation can be increased.

According to one embodiment of the present invention, the touch sensor may sequentially detect the position of the object, and the processing executing unit may execute a processing based on a history of the position detected by the touch sensor. With the above, it is possible to execute a processing corresponding to a movement operation of an object from the inside area to the outside area and vice versa.

In this embodiment, the processing executing unit may execute a different processing between under the condition that the position corresponding to the position in the inside area and the position corresponding to the position in the outside area are both included in the history of the position detected by the touch sensor and under the condition that only the position corresponding to the position in the inside area is included in the history of the position detected by the touch sensor. With the above, the range of variation of a processing executed can be further increased.

In this embodiment, the processing executing unit may execute a predetermined processing under the condition that the touch sensor detects the position corresponding to one of the position in the inside area and the position in the outside area and thereafter the position corresponding to another. With the above, it is possible to execute a processing corresponding to a movement of an object across the border between the inside area and the outside area.

According to one embodiment of the present invention, the processing executing unit may execute a processing of displaying information in a position in the display unit, the position being specified based on the position detected by the touch sensor. With the above, it is possible display information based on a detected position corresponding to a position in the display surface and a detected position corresponding to a position in the outside area outside the display surface.

According to the present invention, even when an object is placed outside the display surface, as long as the object is placed within the outside area, it is possible to detect the position of the object, and execute a processing corresponding to an option specified based on the position. This makes it possible to effectively utilize the display surface of the display unit, while ensuring a preferable operability of a touch operation by a user.

In one embodiment of the present invention, under the condition that the touch sensor detects a result of detection corresponding to a movement of the object of which position is detected by the touch sensor along a direction connecting a middle part of the display surface and the edge of the display surface along which the plurality of options are aligned in a line, the selection processing executing unit may execute a processing based on at least one of the plurality of options displayed on the display surface, the at least one being specified based on a distance between the option and the position of the object. With the above, a user can carry out a processing based on an option specified based on the distance between the position of an object and the option through an intuitive operation of moving the object along the direction connecting the middle part of the display surface and an edge of the same.

In one embodiment of the present invention, the display processing executing unit may display the plurality of options along the edge of the display surface under the condition that the touch sensor detects a position corresponding to the edge of the display surface. With the above, it is possible to execute a processing of displaying an option along an edge in response to an operation of having an object to touch the edge of the display surface.

In one embodiment of the present invention, the display processing executing unit may display an option on the display unit in a manner different from other options, the option being specified based on a relationship between the position detected by the touch sensor and a position where the option is displayed. With the above, it is possible to present the option specified to a user in an understandable manner.

In this embodiment, under the condition that the touch sensor detects a result of detection corresponding to a movement of the object by a user in a direction along the edge of the display surface along which the plurality of options are aligned, the display processing executing unit may change the option displayed in a manner different from other options, depending on the result of detection by the touch sensor. With the above, a user can change the specified option through a movement operation of an object.

In one embodiment of the present invention, the display processing executing unit may display the plurality of options aligned along the edge of the display surface under the condition that the touch sensor detects a position corresponding to the edge of the display surface, after the plurality of options are displayed aligned on the display unit, the display processing executing unit may display an option on the display unit in a manner different from other options, the option being specified based on a relationship between the position detected by the touch sensor and a position where the option is displayed, and under the condition that the touch sensor detects a result of detection corresponding to a movement of the object by a user along a direction connecting a middle part of the display surface and the edge of the display surface along which the plurality of options are displayed aligned, the selection processing executing unit may execute a processing based on the option displayed in the manner different from the other options.

In one embodiment of the present invention, the option may be an icon corresponding to a program, and the selection processing executing unit may execute a processing to activate a program corresponding to the option specified.

### BRIEF DESCRIPTION OF DRAWINGS

FIG. 1 is a perspective view showing one example of an external appearance of a portable game device according to this embodiment;
FIG. 2 is a structural diagram showing one example of an inside structure of the portable game device shown in FIG. 1;
FIG. 3 is a functional block diagram showing one example of a function implemented in a portable game device according to this embodiment;
FIG. 4A is a diagram showing a first use example of a portable game device according to this embodiment;
FIG. 4B is a diagram showing a first use example of a portable game device according to this embodiment;
FIG. 5A is a diagram showing a second use example of a portable game device according to this embodiment;
FIG. 5B is a diagram showing a second use example of a portable game device according to this embodiment;
FIG. 5C is a diagram showing a second use example of a portable game device according to this embodiment;
FIG. 6 is a diagram showing a third use example of a portable game device according to this embodiment;
FIG. 7 is a diagram showing a fourth use example of a portable game device according to this embodiment;
FIG. 8 is a diagram showing a first applied example in which a portable game device according to this embodiment is applied to a portable information terminal;
FIG. 9A is a diagram showing a second applied example of the portable game device according to this embodiment;
FIG. 9B is a diagram showing a second applied example of the portable game device according to this embodiment; and
FIG. 9C is a diagram showing a second applied example of the portable game device according to this embodiment.

### DESCRIPTION OF EMBODIMENTS

In the following, one embodiment of the present invention will be described in detail based on the accompanying drawings.

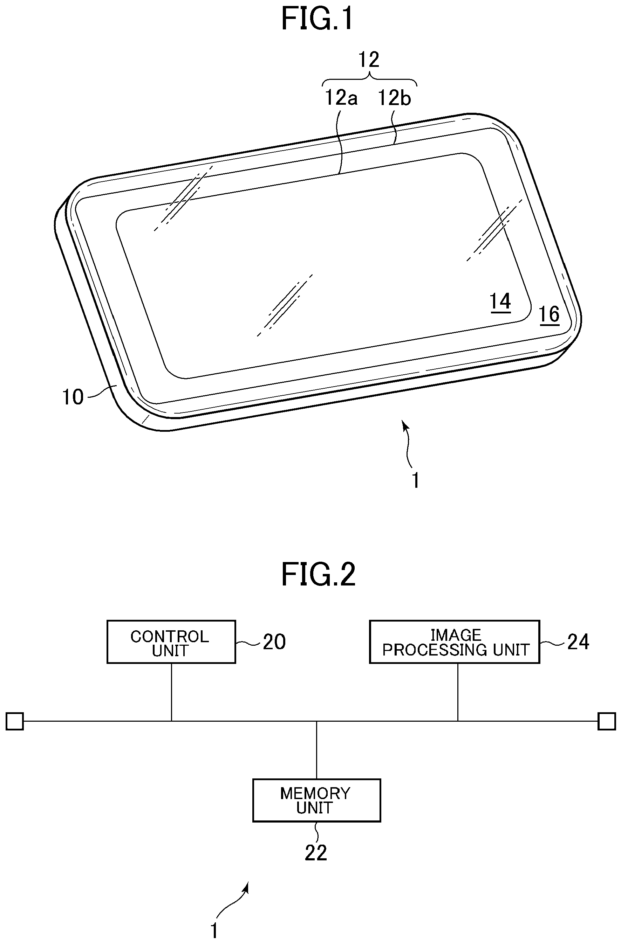

FIG. 1 is a perspective view showing one example of an external appearance of an information processing system according to an embodiment of the present invention (e.g., a portable game device 1 in this embodiment) . As shown in FIG. 1, the housing 10 of the portable game device 1 has a substantially rectangular plate-like shape as a whole with a touch panel 12 provided on the front surface thereof. The touch panel 12 has a substantially rectangular shape, and comprises a display unit (display 12a) and a touch sensor 12b. The display 12a may be a variety of image display devices, such as a liquid crystal display panel, an organic EL display panel, or the like.

The touch sensor 12b is placed overlapping the display 12a, and has a substantially rectangular detection surface in a shape corresponding to that of the display surface of the display 12a. In this embodiment, the touch sensor 12b sequentially detects a touch on the detection surface by an object such as a user's finger or a stylus at a predetermined time interval. Then, upon detection of a touch by an object, the touch sensor 12b detects the position touched by the object. Note that the touch sensor 12b may be of any type, such as, e.g., a static capacitance type, a pressure sensitive type, and an optical type, as long as it is a device capable of detecting the position of an object on the detection surface.

As shown in FIG. 1, in this embodiment, the size of the display 12a differs from that of the touch sensor 12b. That is, the touch sensor 12b is larger than the display 12a. The display 12a and the touch sensor 12b are accommodated in the housing 10 such that the middle of the display 12a is positioned slightly right below the middle of the touch sensor 12b. Note that, alternatively, the touch sensor 12b and the display 12a may be positioned in the housing 10 such that the respective middles coincide to each other. In the following, the touch sensor area where the display 12a overlaps the touch sensor 12b (an area occupying the display surface of the display 12a) is hereinafter referred to as an inside area 14, while a touch sensor area adjacent to the inside area 14 and outside the display surface of the display 12a is hereinafter referred to as an outside area 16.

Note that, although not shown in FIG. 1, in the portable game device 1, a variety of operating members, such as, e.g., a button and a switch, for receiving an input of operation by a user, and an image capturing unit, such as a digital camera, may be provided on the front, rear, or side surface of the housing 10, besides the touch panel 12.

FIG. 2 is a structural diagram showing one example of an inside structure of the portable game device 1 shown in FIG. 1. As shown in FIG. 2, the portable game device 1 comprises a control unit 20, a memory unit 22, and an image processing unit 24. The control unit 20 is, e.g., a CPU, and executes various information processings according to a program stored in the memory unit 22. The memory unit 22 is, e.g., a memory element such as, e.g., a RAM or a ROM, or a disk device, and stores a program to be executed by the control unit 20 and various data. The memory unit 22 may function also as a working memory of the control unit 20.

The image processing unit 24 comprises, e.g., a GPU and a frame buffer memory, and renders an image to be shown on the display 12a according to an instruction output from the control unit 20. Specifically, the image processing unit 24 has a frame buffer memory corresponding to the display area of the display 12a, and the GPU renders an image into the frame buffer memory for every predetermined period of time according to an instruction from the control unit 20. The image rendered in the frame buffer memory is converted into a video signal at a predetermined time, and shown on the display 12a.

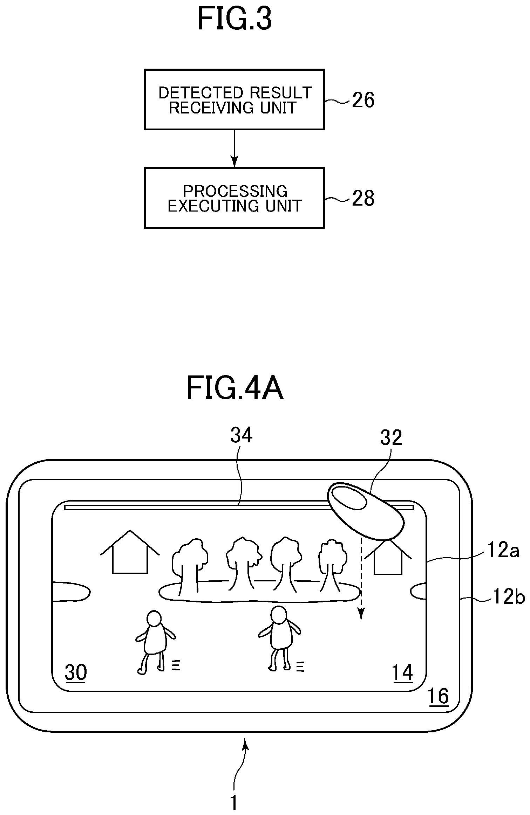

FIG. 3 is a functional block diagram showing one example of functions implemented in the portable game device 1 according to this embodiment. As shown in FIG. 3, the portable game device 1 according to this embodiment comprises a detected result receiving unit 26 and a processing executing unit 28. The detected result receiving unit 26 is implemented mainly using the touch sensor 12b and the control unit 20. The processing executing unit 28 is implemented mainly using the control unit 20 and the image processing unit 24. These elements are achieved by executing a program installed in the portable game device 1, or a computer, by the control unit 20 of the portable game device 1. The program is supplied to the portable game device 1 via a computer readable information transmission medium, such as a CD-ROM or a DVD-ROM, or via a communication network such as the Internet.

The detected result receiving unit 26 receives a result of detection by the touch sensor 12b. In this embodiment, the touch sensor 12b outputs a result of detection corresponding to a position touched by an object to the detected result receiving unit 26 at a predetermined time interval, and the detected result receiving unit 26 sequentially receives the touched position data corresponding to the touched position by an object detected at a predetermined time interval by the touch sensor 12b.

The processing executing unit 28 executes various processings, using the result of detection received by the detected result receiving unit 26. Specifically, the processing executing unit 28 detects the content of an operation input by a user, using the result of detection (e.g., touched position data) by the touch sensor 12b regarding the position of an object such as a user's finger or a stylus, then executes a processing corresponding to the detected content of operation input, and displays a result of processing on the display 12a to thereby present to a user.

In this embodiment, as the detection surface of the touch sensor 12b is provided in the outside area 16 adjacent to the inside area 14 corresponding to the display 12a, an operation of tracing the detection surface of the touch sensor 12b with an object such as the user's finger or a stylus from outside to inside the display 12a or vice versa (hereinafter referred to as a slide operation) can be detected. With the above, according to this embodiment, the range of variation of detectable touch operations is increased, compared to a case in which the display surface of the display 12a occupies the same area as the detection surface of the touch sensor 12b. Further, the portable game device 1 according to this embodiment facilitates an operation of an edge of the touch sensor 12b, compared to a portable game device 1 having a frame member formed outside the touch sensor 12b.

### [First Use Example]

In the following, a use example of the portable game device 1 according to this embodiment will be described.

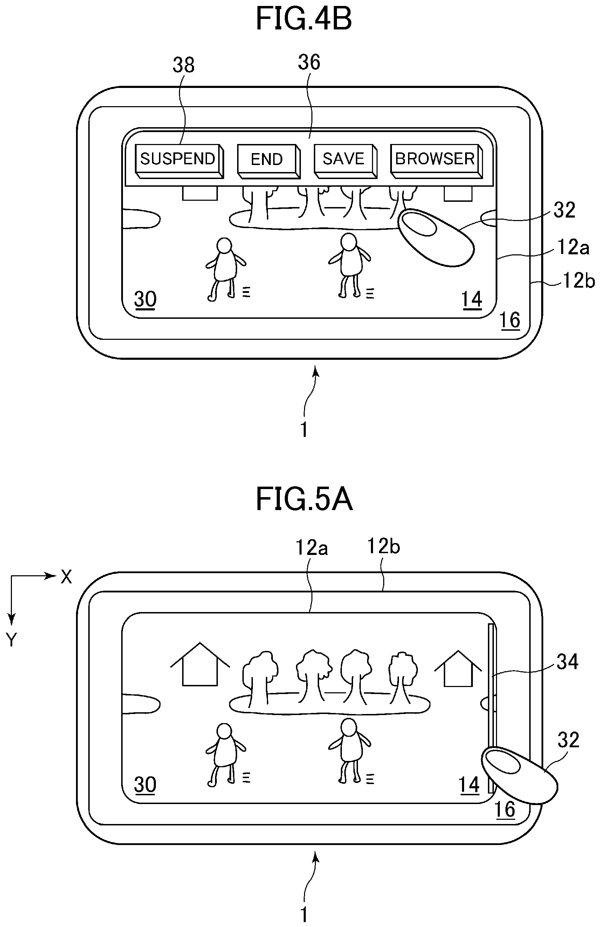

FIGS. 4A and 4B are diagrams showing a first use example of the portable game device 1. In the portable game device 1 shown in FIG. 4A, a game screen image 30 is displayed on the display 12a. When a user touches the game screen image 30 with his/her finger or the like, the detected result receiving unit 26 receives touched position data corresponding to the position touched by the finger 32. Then, the processing executing unit 28 executes a processing corresponding to the touched position data.

Along the upper side of the game screen image 30 shown in FIG. 4A, a band-like indicator image 34 is displayed, extending in the lateral direction along the edge of the display 12a. When a user executes a slide operation with his/her finger 32 by touching the outside area 16 of the touch sensor 12b with the finger 32 and then sliding the finger 32 toward the inside area 14, the touch sensor 12b sequentially detects the position of the finger 32 touching the detection surface for every predetermined period of time. Then, the detected result receiving unit 26 sequentially receives a series of touched position data corresponding to the detected touched positions. Then, based on the received series of touched position data, the processing executing unit 28 detects that a slide operation of the finger 32 across the indicator image 34 from the outside area 16 to the inside area 14 is executed. Then, according to this determination, the processing executing unit 28 displays an operation panel image 36 corresponding to the indicator image 34 in an upper part of the display 12a, as shown in FIG. 4B. The operation panel image 36 includes a button 38 corresponding to a predetermined processing. When a user touches any button 38 with his/her finger 32 or the like, the processing executing unit 28 executes a processing corresponding to the touched button 38. As described above, according to the first use example, the processing executing unit 28 executes a processing based on a position in the inside area 14 and a position in the outside area 16. Further, the processing executing unit 28 executes a processing based on the history of touches positions having been detected so far by the touch sensor 12b.

In the first use example, a user's touching the detection surface of the touch sensor 12b with his/her finger 32 and sliding the finger 32 across the indicator image 34 displayed near an edge of the display 12a enables an operation of displaying the operation panel image 36 in an area near where the indicator image 34 is displayed. With the above, according to the first use example, an operation on be executed to display the operation panel image 36 can be presented to a user in a readily understandable manner using the indicator image 34. Further, a user can control display of the game screen image 30 through an intuitively understandable operation of sliding his/her finger 32 across an edge of the display 12a. Still further, according to the first use example, when the width of the indicator image 34 is made smaller, a wider area in the display 12a can be ensured for use as the game screen image 30. With the above, the display surface of the display 12a can be effectively utilized.

Note that, in the first use example, when a user slides his/her finger 32 from the outside area 16 along the edge of the screen where the indicator image 34 is displayed toward the inside area 14, the processing executing unit 28 may display the operation panel image 36 on the display 12a at the same speed as the sliding finger 32 of the user. With the above, as the operation panel image 36 is displayed following the slide operation, a user can be given an intuitive sense of operation as if the operation panel image 36 were drawn from the edge of the screen of the display 12a. Further, in the first use example, the processing executing unit 28 may display the operation panel image 36 on the display 12a in response to a slide operation of the finger 32 from the inside area 14 toward the outside area 16. Still further, in the first use example, the indicator image 34 may be displayed along the left, right, or lower side of the display 12a, and the operation panel image 36 may be displayed in a position corresponding to the display position of the indicator image 34.

### [Second Use Example]

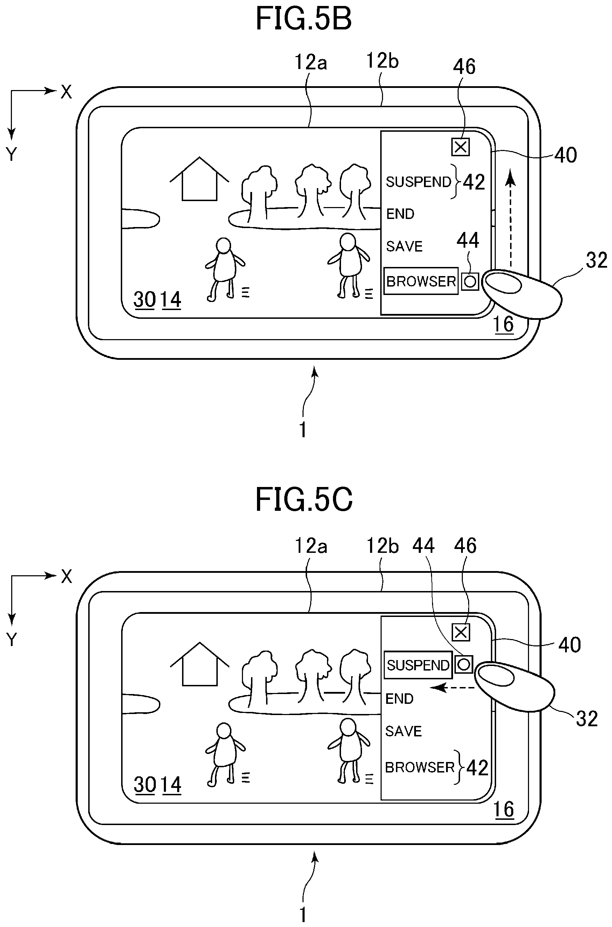

FIGS. 5A, 5B and 5C are diagrams showing a second use example of the portable game device 1. In the portable game device 1 shown in FIG. 5A, a game screen image 30 is displayed on the display 12a. When a user touches the game screen image 30 with his/her finger 32 or the like, the processing executing unit 28 executes a processing corresponding to the touched position. Note that in FIGS. 5A, 5B and 5C, the lateral (rightward) direction is defined as the X-axial direction and the portrait (downward) direction as the Y-axial direction.

Along the right side of the game screen image 30 shown in FIG. 5A, a band-like indicator image 34 is displayed, extending in the portrait direction along the edge of the display 12a. When a user touches a position in a range within a predetermined distance from the indicator image 34 with his/her finger 32, and the detected result receiving unit 26 thereupon receives touched position data corresponding to the position touched (e.g., a case with the X coordinate of the indicator image 34 and that of the touched position by the finger 32 being both equal to or smaller than a predetermined value, or the like), the processing executing unit 28 displays a menu image 40 corresponding to the indicator image 34 in a right part of the game screen image 30, as shown in FIG. 5B. In the second use example, the menu image 40 includes a plurality of options 42 (e.g., a character string describing the content of a processing) to be selected by a user, and the options 42 are aligned along the edge of the display surface of the display 12a. As described above, in the second use example, the processing executing unit 28 displays the respective options 42 aligned along an edge of the display surface of the display 12a. Note that, in the second use example, a touch position for a finger 32 corresponding to an operation of displaying the menu image 40 may be a position in either the inside area 14 or the outside area 16.

Thereafter, the processing executing unit 28 displays an option 42 with the shortest distance from the position corresponding to the touched position data received by the detected result receiving unit 26 in a manner different from that for the other options 42 (highlighted) . In the example shown in FIG. 5B, a frame is displayed around the option 42 for highlighting (the character string "browser" in the example shown in FIG. 5B), and a selection icon 44 for indicating that the relevant option 42 is selected is shown to the right of the option 42 for highlighting. Note that the option 42 for highlighting may be displayed in a different color from others.

In the second use example, the touch sensor 12b detects a touched position by the finger 32 for every predetermined period of time, and the detected result receiving unit 26 sequentially receives touched position data corresponding to the touched position by the finger 32. Then, every receipt of the touched position data by the detected result receiving unit 26, the processing executing unit 28 compares the touched position data received and the immediately preceding touched position data received to detect the moving direction of the finger 32. Then, when the moving direction of the finger 32 is detected as the up-down direction (the Y-axial direction), the processing executing unit 28 specifies the option 42 for highlighting, based on the received touched position data, and then updates the menu image 40 by displaying the option 42 highlighted. In the example shown in FIG. 5C, the option 42 corresponding to the character string "suspend" is shown highlighted. When a user executes a slide operation by sliding his/her finger 32 along the right side edge of the display 12a (e.g., a slide operation of sliding the finger 32 along the Y-axial direction) in this manner, the option 42 for highlighting is changed. As described above, when a result of detection relevant to movement of an object in the direction along the edge of the display surface of the display 12a is detected by the touch sensor 12b, the processing executing unit 28 may change the option 42 for highlighting according to the result of detection.

Then, when a user executes a slide operation by sliding his/her finger 32 from the right side edge of the display 12a to the middle part of the same (e.g., slide operation of the finger 32 sliding leftward in the X-axis direction), and the detected result receiving unit 26 receives a series of touched position data corresponding to the operation, the processing executing unit 28 detects that the moving direction of the finger 32 is the left-right direction (the X-axis). In this case, the processing executing unit 28 executes a processing corresponding to the highlighted option 42. In the example shown in FIG. 5C, the processing executing unit 28 executes a processing for suspention.

In the second use example, in a situation in which the option 42 is hidden by a user's finger 32 when the user carries out a slide operation by sliding his/her finger 32 along the edge of the display 12 as the option 42 is displayed in an area up to the edge of the display 12a, the position of the finger 32 can be detected even when the finger 32 is placed outside the display 12a as the touch sensor 12b is provided in the outside area 16 as well. As described above, in the second use example, the display surface of the display 12a can be effectively utilized while ensuring preferable operability of a touch operation by a user.

In the second use example, the processing executing unit 28 may display highlighted the option 42 specified based on the distance from the position corresponding to the touched position data received by the detected result receiving unit 26 (e.g., the option 42 with the distance from the position corresponding to the touched position data received by the detected result receiving unit 26, being within a predetermined range). Further, when a user executes a slide operation by sliding his/her finger 32 from the right side edge of the display 12a in a direction departing from the middle of the same, the processing executing unit 28 may execute a processing corresponding to the option 42 that is highlighted at that time. Still further, in the second use example, when a user touches a close icon 46 included in the menu image 40 with his/her finger 32, the processing executing unit 28 may update the content displayed on the display 12a such that the menu image 40 disappears. Note that the position, shape, and so forth of the option 42 in the menu image 40 are not limited to the above described example. For example, the option 42 may be an image of an icon or the like. Further, the second use example may be applied to an operation panel of a music player or a photo viewer. In this case, each option 42 may be a character string or an icon corresponding to an operation on the music player or the photo viewer. Yet further, the second use example may be applied to, e.g., a control panel for various settings. In this case, each option 42 is, e.g., a character string or an icon corresponding to a setting item. In the second use example, the processing executing unit 28 may display a menu item with high frequency of use by a user as the option 42 displayed in the menu image 40.

### [Third Use Example]

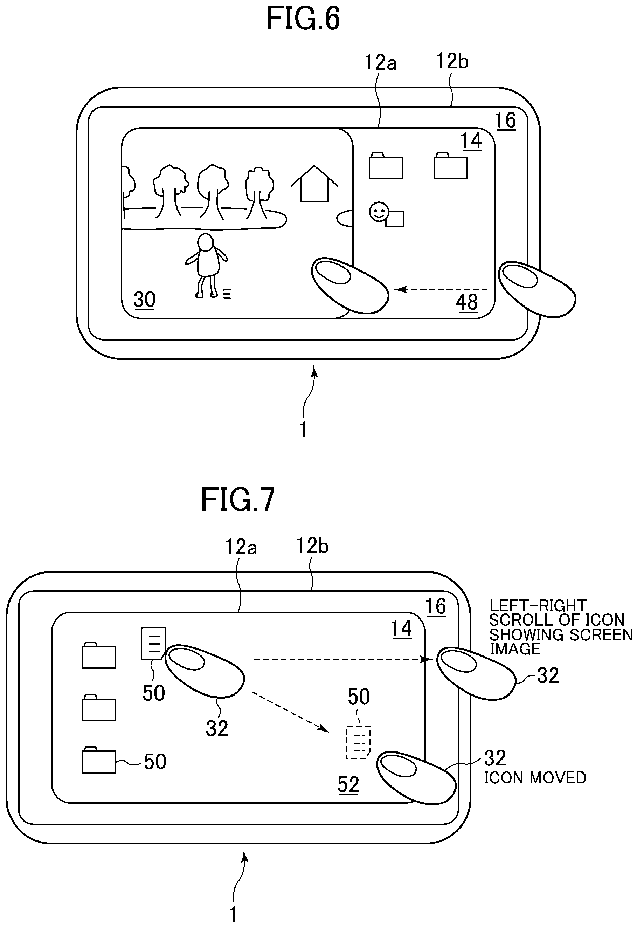

FIG. 6 is a diagram showing a third use example of the portable game device 1. In the third use example, at the initial state, e.g., a game screen image 30 similar to that shown in FIG. 5A is shown on the display 12a. Then, when a user touches the game screen image 30 with his/her finger 32 or the like, the processing executing unit 28 executes a processing for a game corresponding to the touched position.

Then, when a user touches the outside area 16 to the right of the display 12a with his/her finger 32 and then slides the finger 32 leftward to the inside area 14, the detected result receiving unit 26 receives a series of touched position data corresponding to the operation. Then, the processing executing unit 28 moves the game screen image 30 leftward, based on the touched position data, as shown in FIG. 6, and displays a system setting screen image 48 for the portable game device 1 in a right part of the display 12a. Then, when a user touches the system setting screen image 48 with his/her finger 32 or the like, the processing executing unit 28 executes a processing for system setting of the portable game device 1, corresponding to the touched position.

As described above, according to the third use example, play effects such that, while the screen image of a program, such as an ongoing application program or the like, is put aside, a screen image of another program (e.g., a program of an operation system or the like) is shown can be achieved.

### [Fourth Use Example]

FIG. 7 is diagram showing a fourth use example of the portable game device 1. In the portable game device 1 shown in FIG. 7, an icon showing screen image 52 including a plurality of icons 50 is displayed on the display 12a.

When a user touches any icon 50 with his/her finger 32, and then moves the finger 32 in the inside area 14, the processing executing unit 28 moves the touched icon 50 to the position to which the finger 32 has been moved (drag and drop).

Meanwhile, when a user touches any icon 50 with his/her finger 32, and then moves the finger 32 to the outside area 16 to the right of the display 12a, the processing executing unit 28 scrolls leftward the icon showing screen image 52 itself. Then, when the user moves his/her finger 32 into the inside area 14, the processing executing unit 28 stops scrolling the icon showing screen image 52.

As described above, in the fourth use example, the processing executing unit 28 executes a different processing between under the condition that a position corresponding to a position in the inside area 14 and that in the outside area 16 are both included in the history of positions having been detected so far by the touch sensor 12b and under the condition that only a position corresponding to a position in the inside area 14 is included in the history of positions having been detected so far by the touch sensor 12b.

In the fourth use example, as the touch sensor 12b is provided in the outside area 16, the touch sensor 12b outputs a different result of detection between under the condition that the finger 32 is moved within the inside area 14 and under the condition that the finger 32 is moved from the inside area 14 to the outside area 16. Therefore, the processing executing unit 28 can execute a different processing between under the condition that the finger 32 is moved within the inside area 14 and under the condition that the finger 32 is moved from the inside area 14 to the outside area 16.

In the above example, there is no need of providing a position within the display 12a, to be touched by a user with his/her finger 32 when the user wishes to scroll the icon showing screen image 52, the display area of the display 12a can be more effectively utilized than conventional art.

Note that in the fourth use example, when a user touches any icon 50 with his/her finger 32 and slides the finger 32 to the outside area 16 to the right of the display 12a, the processing executing unit 28 may scroll leftward the icon showing screen image 52 itself in units of a page corresponding to the size of the display 12a.

### [First Applied Example]

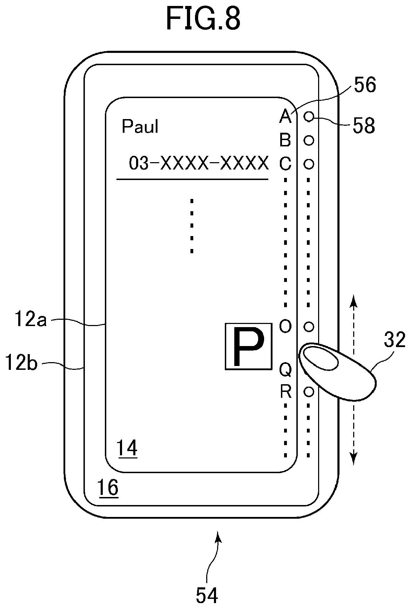

In the following, applied examples in which this embodiment is applied to a portable information terminal 54, such as a portable phone, will be described. FIG. 8 is a diagram showing a first applied example of the embodiment. In the portable information terminal 54 shown in FIG. 8, index information items 56 are aligned in a single line in the portrait direction in a right part of the display 12a. Moreover, marks 58 are also aligned in a single line in the portrait direction in the outside area 16 to the right of the display 12a. In this applied example, the index information item 56 (e.g., a letter) has one-to-one corresponding relationship with the mark 58, with corresponding index information item 56 and mark 58 being arranged side by side. A plurality of personal information items each including a name of a person, a phone number, and so forth are registered in advance in a memory unit of the portable information terminal 54 shown in FIG. 8.

When a user touches a position in the outside area 16 to the right of the display 12a with his/her finger 32, the processing executing unit 28 displays highlighted an index information item 56 positioned closest to the touched position, and also displays information corresponding to the highlighted index information item 56 (e.g., a list of personal information items registered in the portable information terminal 54, with the first letter of a name thereof corresponding to the highlighted alphabet) on the display 12a.

When a user executes a slide operation by sliding his/her finger 32 in the direction in which the marks 58 are aligned, the processing executing unit 28 changes the content displayed on the display 12a in response to the operation, such that the index information item 56 positioned closest to the finger 32 is displayed highlighted.

According to this applied example, as a user can select the index information item 56 using an area outside the screen of the display 12a, even an area of the display 12a up to the edge thereof can be used for displaying the index information item 56.

Note that, in the applied example, when a user touches a position in the outside area 16 with his/her finger 32, then releases the finger 32 from the touch sensor 12b, and again touches the touch sensor 12b with the finger 32, the processing executing unit 28 may update the content displayed on the display 12a such that the index information item 56 positioned closest to the touched position is displayed highlighted, and information corresponding to the highlighted index information 56 is displayed on the display 12a. In this applied example, no mark 58 may be provided in the outside area 16 to the right of the display 12a.

### [Second Applied Example]

In the following, an applied example in which this embodiment is applied to a portable information terminal 54 having a motion image reproduction function will be described.

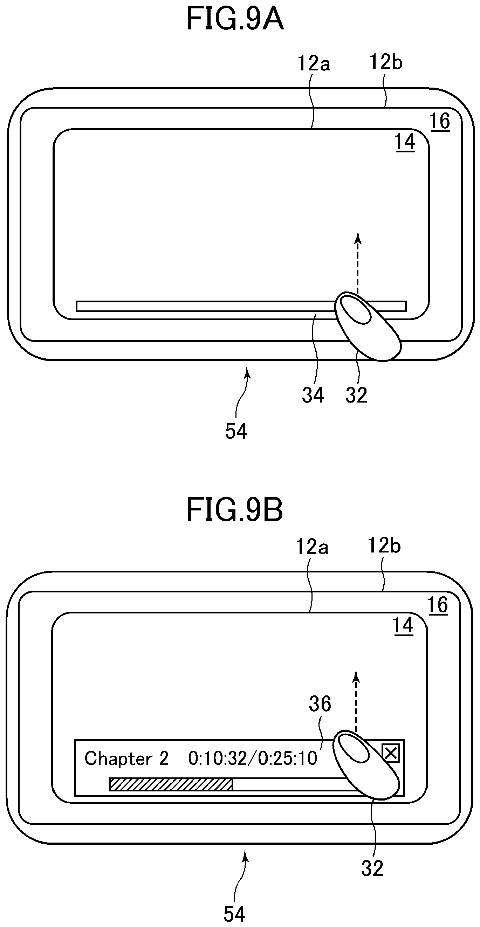

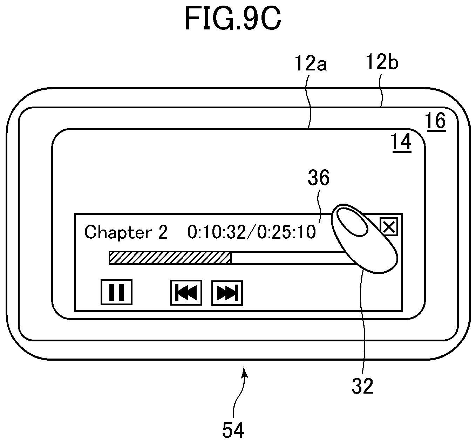

FIGS. 9A, 9B, and FIG. 9C are diagrams showing a second applied example of the portable information terminal 54. In the portable information terminal 54 shown in FIG. 9A, a band-like indicator image 34 is displayed along the lower side of the screen image shown in FIG. 9A, extending in the lateral direction along the edge of the display 12a. When a user touches the indicator image 34 with his/her finger 32 and then slides the finger 32 from the lower edge of the display 12a toward the middle part of the same, the processing executing unit 28 displays an operation panel image 36 for a first step portion on the display 12a, as shown in FIG. 9B. In this applied example, the processing executing unit 28 changes the content displayed on the display 12a such that, e.g., the indicator image 34 expands in the portrait direction to complete the operation panel image 36. When a user further slides his/her finger 32 toward the middle part of the display 12a without releasing from the display 12a, the processing executing unit 28 displays an operation panel image 36 for a second step portion in an area below the operation panel image 36 for the first step portion on the display 12a, as shown in FIG. 9C. Thereafter, when a user releases his/her finger 32 from the display 12a, the processing executing unit 28 executes display control for the display 12a such that the operation panel image 36 disappears from the display 12a.

Note that in this applied example, when the detected result receiving unit 26 is informed that the indicator image 34 is touched, the processing executing unit 28 may display the operation panel image 36 appearing from one end of the display 12a where the indicator image 34 is displayed. In this applied example, e.g., the processing executing unit 28 may display the operation panel image 36 for the first step portion on the display 12a in response to one slide operation, and thereafter display the operation panel image 36 for the second step portion on the display 12a upon receipt again of a similar slide operation. Further, the processing executing unit 28 may control so as to display either the operation panel image 36 for the first step portion or the operation panel images 36 for the first and second step portions on the display 12a, depending on the moving amount (or the moving speed) of the finger 32 in the slide operation.

The content shown as the operation panel image 36 for the first step portion and that for the second step portion may be separated from each other, based on the priority order given in advance to a function button. FIGS. 9A, 9B, and 9C show an example operation on be executed during reproduction of motion image content, in which the content shown as the operation panel image 36 for the first step portion and that as the second step portion are both relevant to motion picture reproduction. In this applied example, the first step portion includes information concerning the current motion image reproducing condition, such as the current chapter, an elapsed period of time, time line, while the second step portion includes function buttons, such as pause, play, stop, fast-forward, fast-rewind, repeat, help, and so forth. Note that the portable information terminal 54 in this applied example may change the content displayed in the respective first and second step portions and the setting of the function button, according to a setting operation received from a user.

When a user touches the button with an X mark shown right above the operation panel image 36, the processing executing unit 28 may execute display control for the display 12a such that the operation panel image 36 disappears from the display 12a. Further, when a user touches an area outside the operation panel image 36, the processing executing unit 28 may execute display control for the display 12a such that the operation panel image 36 disappears from the display 12a. Still further, when a user executes a slide operation with his/her finger 32 by sliding the finger 32 in a direction opposite from the direction in which the operation panel image 36 is appearing, the processing executing unit 28 may execute display control for the display 12a such that the operation panel image 36 disappears from the display 12a. In the above, the processing executing unit 28 may execute display control for the display 12a such that the second and first step parts of the operation panel images 36 disappear from the display 12a step by step in this order, depending on the moving amount (or the moving speed) of the finger 32 in a slide operation.

Note that a slide operation by a user in displaying the operation panel image 36 on the display 12a is not limited to the above described operation. Specifically, the processing executing unit 28 may display the operation panel image 36 on the display 12a in response to an operation on a button provided outside the display 12a, a slide operation of a finger 32 from the lower edge of the display 12a toward the middle part of the same executed outside the indicator image 34, a slide operation from the touch sensor area outside the display 12 into the display 12, and so forth.

Note that the present invention is not limited to the above described embodiments, use examples, and applied examples. Obviously, some of the above described embodiments, use examples, and applied examples may be combined in an information processing system. For example, combination of the above described first and second use examples enables an operation described below. That is, the processing executing unit 28 may initially display the menu image 40 exemplified in FIG. 5A on the display 12a in response to a user's finger 32 sliding leftward from the outside area 16 to the right of the display 12a to the inside area 14, then display highlighted the option 42 with the shortest distance from the position corresponding to the touched position data received by the detected result receiving unit 26 in response to the user moving his/her finger 32 up and down without releasing from the display 12a, and execute a processing corresponding to the highlighted option 42 in response to the user further sliding the finger 32 leftward without releasing the finger 32. With the above, a user can execute an operation of displaying the menu image 40 and of selecting the option 42 as a series of operations without releasing his/her finger 32 from the display 12a.

For example, in response to a user's slide operation relative to the detection surface of the touch sensor 12b, the processing executing unit 28 may execute a processing of displaying a straight line or a curved line on the display surface of the display 12a, the straight line or the curved line being specified through interpolation of a position indicated by the touched position data sequentially received by the detected result receiving unit 26. In the above, the processing executing unit 28 may display a line that is specified through interpolation of a position indicated by the touched position data corresponding to a position in the outside area 16, on the display surface of the display 12a.

Further, the touch sensor 12b may detect a touched position and press strength of an object. Still further, the touch sensor 12b may detect the position of an object relative to the detected surface not only when the object touches the detection surface, but also when the object has come into a determination possible area above the detection surface. Yet further, the width of an area of the touch sensor 12b present outside the display 12a may differ between the respective sides of the display 12a. Further, the touch sensor 12b may not be larger than to be present outside the display 12a along all sides of the display 12a. The touch sensor 12b may not cover the entire area of the display surface inside the display 12a. The display 12a may be positioned closer to the housing 10 than the touch sensor 12b, or the touch sensor 12b may be positioned closer to the housing 10 than the display 12a.

This embodiment may be applied to an information processing system other than the portable game device 1. Specifically, e.g., this embodiment may be applied to an information processing system in which an operation input device including the touch panel 12 is accommodated in an housing different from that in which the information processing device functioning as the detected result receiving unit 26 and the processing executing unit 28 are accommodated, and the operation input device is connected to the information processing device by a cable or the like.

## Claims

1. An information processing system (1) comprising:
An image processing unit (24) which displays images on a display (12a); and
a processing executing unit (20, 28) which executes processes according to at least one of a plurality of options (42) displayed in a menu image (40) on the said display,
wherein the said image processing unit (24) displays an indicator image (34) along the edge of a display part (12a), and in that the said information processing system is furnished with a touch sensor (12b) comprising an inner area (14) occupying the display surface of the display (12a), and an outer area (16) which is an area outside and adjacent to the said display surface,
and when a slide operation of an object (32) across the indicator image from the outer area (16) toward the inner area (14) is detected by the touch sensor (12b), which detects the positions of an object on the touch sensor area and which is capable of detecting the relevant position even when this extends into the said outer area (16), a menu image (40) is displayed in which a plurality of options (42) are aligned and in which the option with the shortest distance from the position detected by the said touch sensor is highlighted,
whereby when the said touch sensor (12b) detects detection results corresponding to the movement of the object (32) by the user in a direction along the edge of the said display surface on which the said plurality of options (42) are aligned, the said information processing system changes the option which is highlighted accordingly with the detection results, and
whereby when the said touch sensor (12b) has detected detection results corresponding to further movement of the object (32) by the user in a direction towards the middle part of the said display surface, processing is executed based on the option which is highlighted.

2. An information processing system according to Claim 1, **characterised in that**:
the said options are icons corresponding to programs; and
the said processing executing unit executes processes which start programs corresponding to the specified options.

3. An information processing method comprising:
an image display processing step at which images are displayed on a display (12a); and
a process execution step at which processes are executed according to at least one of the plurality of options (42) displayed in a menu image (40) on the said display (12a),
wherein at said image processing step, an indicator image (34) is displayed following along the edge of a display part (12a),
in the said display processing step, when a slide operation of an object (32) across the indicator image from an outer area (16) toward an inner area (14) is detected by a touch sensor (12b), which detects the position of an object on a touch sensor area furnished in an area comprising the inner area (14) occupying said display surface of the display and the outer area (16) which is an area outside and adjacent to the said display surface, and is capable of detecting the particular position even when this detected position protrudes into the said outer area, it displays at the position of the said indicator image and following along the edge of the said indicator image, a menu image (40) of multiple options (42) in alignment and with the option with the shortest distance from the position detected by that touch sensor highlighted,
in the said display processing step, when the said touch sensor (12b) detects detection results corresponding to the movement of the object (32) by the user, in the direction along the edge of the said display part in which the said plurality of options are aligned, the option which is highlighted is changed according to the particular detection results, and
in the said process execution step, when the said touch sensor (12b) detects detection results corresponding to further movement of an object by the user in a direction towards the centre of the said display surface, the data showing the detection results is output to an information processor which executes processes on the basis of the highlighted option.

4. A program **characterised in that** it causes a computer to perform the method of claim 3.

5. A computer readable information storage medium that stores a program according to claim 4.

## Patentansprüche

1. Informationsverarbeitungssystem (1), das Folgendes umfasst:
eine Bildverarbeitungseinheit (24), die Bilder auf einer Anzeige (12a) anzeigt; und
eine Verarbeitungsausführungseinheit (20, 28), die Prozesse gemäß wenigstens einer von mehreren Optionen (42), die in einem Menübild (40) auf der Anzeige angezeigt werden, ausführt,
wobei die Bildverarbeitungseinheit (24) ein Indikatorbild (34) entlang des Randes eines Anzeigeteils (12a) anzeigt, und dadurch, dass das Informationsverarbeitungssystem mit einem Berührungssensor (12b) ausgestattet ist, der einen Innenbereich (14), der die Anzeigeoberfläche der Anzeige (12a) belegt, und einen Außenbereich (16), der ein Bereich außerhalb der und angrenzend an die Anzeigeoberfläche ist, umfasst,
und, wenn ein Schiebevorgang eines Objekts (32) über das Indikatorbild von dem Außenbereich (16) zu dem Innenbereich (14) hin durch den Berührungssensor (12b) detektiert wird, der die Positionen eines Objekts auf dem Berührungssensorbereich detektiert und der dazu in der Lage ist, die relevante Position zu detektieren, selbst wenn diese sich in den Außenbereich (16) erstreckt, ein Menübild (40) angezeigt wird, in dem mehrere Optionen (42) ausgerichtet sind und in dem die Option mit dem kürzesten Abstand von der Position, die durch den Berührungssensor detektiert wird, hervorgehoben wird,
wobei, wenn der Berührungssensor (12b) Detektionsergebnisse detektiert, die der Bewegung des Objekts (32) durch den Benutzer in einer Richtung entlang des Randes der Anzeigeoberfläche, auf der die mehreren Optionen (42) ausgerichtet sind, entspricht, das Informationsverarbeitungssystem die Option, die hervorgehoben wird, gemäß den Detektionsergebnissen ändert, und
wobei, wenn der Berührungssensor (12b) Detektionsergebnisse detektiert hat, die einer weiteren Bewegung des Objekts (32) durch den Benutzer in einer Richtung zu dem Mittelteil der Anzeigeoberfläche entsprechen, eine Verarbeitung basierend auf der Option, die hervorgehoben ist, ausgeführt wird.

2. Informationsverarbeitungssystem nach Anspruch 1, **dadurch gekennzeichnet, dass**:
die Optionen Symbole sind, die Programmen entsprechen; und
die Verarbeitungsausführungseinheit Prozesse ausführt,
die Programme starten, die den spezifizierten Optionen entsprechen.

3. Informationsverarbeitungsverfahren, das Folgendes umfasst:
einen Bildanzeigeverarbeitungsschritt, bei dem Bilder auf einer Anzeige (12a) angezeigt werden; und
einen Prozessausführungsschritt, bei dem Prozesse gemäß wenigstens einer der mehreren Optionen (42), die in einem Menübild (40) auf der Anzeige (12a) angezeigt werden, ausgeführt werden,
wobei bei dem Bildverarbeitungsschritt ein Indikatorbild (34) angezeigt wird, das entlang dem Rand eines Anzeigeteils (12a) folgt,
in dem Anzeigeverarbeitungsschritt, wenn ein Schiebevorgang eines Objekts (32) über das Indikatorbild von einem Außenbereich (16) zu einem Innenbereich (14) hin durch einen Berührungssensor (12b) detektiert wird, der die Position eines Objekts auf einem Berührungssensorbereich detektiert, der in einem Bereich bereitgestellt ist, der den Innenbereich (14), der die Anzeigeoberfläche der Anzeige belegt, und den Außenbereich (16) umfasst, der ein Bereich außerhalb der und angrenzend an die Anzeigeoberfläche ist, und der dazu in der Lage ist, die bestimmte Position selbst dann zu detektieren, wenn diese detektierte Position in den Außenbereich vordringt, sie an der Position des Indikatorbildes und entlang dem Rand des Indikatorbildes folgend ein Menübild (40) aus mehreren Optionen (42) in Ausrichtung und mit der Option mit dem kürzesten Abstand von der Position, die durch den Berührungssensor detektiert wurde, hervorgehoben anzeigt,
in dem Anzeigeverarbeitungsschritt, wenn der Berührungssensor (12b) Detektionsergebnisse detektiert, die der Bewegung des Objekts (32) durch den Benutzer in der Richtung entlang des Randes des Anzeigeteils, in dem die mehreren Optionen ausgerichtet sind, entspricht, die Option, die hervorgehoben wird, gemäß den bestimmten Detektionsergebnissen geändert wird, und in dem Prozessausführungsschritt, wenn der Berührungssensor (12b) Detektionsergebnisse detektiert, die einer weiteren Bewegung eines Objekts durch den Benutzer in einer Richtung zu dem Zentrum der Anzeigeoberfläche entsprechen, die Daten, die die Detektionsergebnisse zeigen, an einen Informationsprozessor ausgegeben werden, der die Prozesse auf der Basis der hervorgehobenen Option ausführt.

4. Programm, **dadurch gekennzeichnet, dass** es bewirkt, dass ein Computer das Verfahren nach Anspruch 3 durchführt.

5. Computerlesbares Informationsspeichermedium, das ein Programm nach Anspruch 4 speichert.

## Revendications

1. Système de traitement d'informations (1) comprenant :
une unité de traitement d'images (24) qui affiche des images sur un écran (12a) ; et
une unité d'exécution de traitement (20, 28) qui exécute des processus selon au moins une d'une pluralité d'options (42) affichées dans une image de menu (40) sur ledit écran,
dans lequel ladite unité de traitement d'image (24) affiche une image d'indicateur (34) le long du bord d'une partie de l'écran (12a), et en ce que ledit système de traitement d'informations est pourvu d'un capteur tactile (12b) comprenant une zone interne (14) occupant la surface d'affichage de l'écran (12a), et une zone externe (16) qui est une zone à l'extérieur de ladite surface d'affichage et adjacente à celle-ci,
et, lorsqu'une opération de glissement d'un objet (32) à travers l'image d'indicateur depuis la zone externe (16) vers la zone interne (14) est détectée par le capteur tactile (12b), qui détecte les positions d'un objet sur la zone du capteur tactile et qui est capable de détecter la position pertinente même lorsque celle-ci s'étend dans ladite zone externe (16), une image de menu (40) est affichée, dans laquelle une pluralité d'options (42) sont alignées et dans laquelle l'option avec la distance la plus courte de la position détectée par ledit capteur tactile est en surbrillance,
comme quoi, lorsque ledit capteur tactile (12b) détecte des résultats de détection correspondant au mouvement de l'objet (32) par l'utilisateur dans une direction le long du bord de ladite surface d'affichage sur laquelle ladite pluralité d'options (42) sont alignées, ledit système de traitement d'informations change l'option qui est en surbrillance conformément aux résultats de détection, et
comme quoi, lorsque ledit capteur tactile (12b) a détecté des résultats de détection correspondant à un autre mouvement de l'objet (32) par l'utilisateur dans une direction vers la partie médiane de ladite surface d'affichage, le traitement est exécuté en se basant sur l'option qui est en surbrillance.

2. Système de traitement d'informations selon la revendication 1, **caractérisé en ce que** :
lesdites options sont des icônes correspondant à des programmes ; et
ladite unité d'exécution de traitement exécute des processus qui font démarrer des programmes correspondant aux options spécifiées.

3. Procédé de traitement d'informations comprenant :
une étape de traitement d'affichage d'images pendant laquelle des images sont affichées sur un écran (12a) ; et
une étape d'exécution de processus pendant laquelle des processus sont exécutés selon au moins une de la pluralité d'options (42) affichées dans une image de menu (40) sur ledit écran (12a),
dans lequel, lors de ladite étape de traitement d'images, une image d'indicateur (34) est affichée suivant le long du bord d'une partie de l'écran (12a),
lors de ladite étape de traitement d'affichage, lorsqu'une opération de glissement d'un objet (32) à travers l'image d'indicateur depuis une zone externe (16) vers une zone interne (14) est détectée par un capteur tactile (12b), qui détecte la position d'un objet sur une zone de capteur tactile prévue dans une zone comprenant la zone interne (14) occupant ladite surface d'affichage de l'écran et la zone externe (16) qui est une zone à l'extérieur de ladite surface d'affichage et adjacente à celle-ci, et qui est capable de détecter la position particulière même lorsque cette position détectée fait saillie dans ladite zone externe, il affiche dans la position de ladite image d'indicateur et suivant le long du bord de ladite image d'indicateur, une image de menu (40) d'options multiples (42) en alignement et avec l'option avec la distance la plus courte de la position détectée par ce capteur tactile en surbrillance,
lors de ladite étape de traitement d'affichage, lorsque ledit capteur tactile (12b) détecte des résultats de détection correspondant au mouvement de l'objet (32) par l'utilisateur, dans la direction le long du bord de ladite partie de l'écran dans laquelle ladite pluralité d'options (42) sont alignées, l'option qui est en surbrillance est changée conformément aux résultats de détection, et
lors de ladite étape d'exécution de processus, lorsque ledit capteur tactile (12b) détecte des résultats de détection correspondant à un autre mouvement d'un objet par l'utilisateur dans une direction vers le centre de ladite surface d'affichage, les données montrant les résultats de détection sont fournies à un processeur d'informations qui exécute des processus en se basant sur l'option en surbrillance.

4. Programme **caractérisé en ce qu'**il fait exécuter à un ordinateur le procédé selon la revendication 3.

5. Support de stockage d'informations lisible par ordinateur qui stocke un programme selon la revendication 4.
